# EUROPEAN PATENT SPECIFICATION

(11) **EP 4 150 819 B1**
(45) Date of publication and mention of the grant of the patent: **02.07.2025**
(21) Application number: 21727251.7
(22) Date of filing: 14.05.2021
(51) Int. Cl.: H04L 1/1822, H04L 1/1867, H04L 1/00

(54) **HARQ BUFFER MANAGEMENT FOR SIDELINK CONFIGURED GRANTS**
HARQ-PUFFERVERWALTUNG FÜR SIDELINK-KONFIGURIERTE BERECHTIGUNGEN
GESTION DE TAMPON HARQ POUR DES AUTORISATIONS CONFIGURÉES DE LIAISON LATÉRALE

(30) Priority: 14.05.2020 US 202063025136 P
(43) Date of publication of application: 22.03.2023
(73) Proprietor: Lenovo (Singapore) Pte. Ltd., New Tech Park 556741 (SG)
(72) Inventor: LOEHR, Joachim, 65203 Wiesbaden (DE); BASU MALLICK, Prateek, 63303 Dreieich (DE); KUCHIBHOTLA, Ravi, Chicago, Illinois 60680 (US); GANESAN, Karthikeyan, 64569 Nauheim (DE)
(74) Representative: Openshaw & Co.
(86) International application number: PCT/IB2021/054173
(87) International publication number: WO 2021/229541

(56) References cited:
- ZTE ET AL: "Mode 1 resource allocation schemes on sidelink", vol. RAN WG1, no. Reno, Nevada, US; 20191118 - 20191122, 9 November 2019 (2019-11-09), XP051823487, Retrieved from the Internet <URL:https://ftp.3gpp.org/tsg_ran/WG1_RL1/TSGR1_99/Docs/R1-1912552.zip R1-1912552 Mode 1 resource scheme on sidelink.docx> [retrieved on 20191109]
- FUJITSU: "Remaining issues on mode 1 resource allocation for NR V2X", vol. RAN WG1, no. e-Meeting; 20200224 - 20200306, 14 February 2020 (2020-02-14), XP051852907, Retrieved from the Internet <URL:https://ftp.3gpp.org/tsg_ran/WG1_RL1/TSGR1_100_e/Docs/R1-2000546.zip R1-2000546 Remaining issues on mode 1 resource allocation for NR V2X.DOCX> [retrieved on 20200214]

## Description

### FIELD

The subject matter disclosed herein relates generally to wireless communications and more particularly relates to managing hybrid automatic repeat request buffers for sidelink configured grants. There is disclosed herein a method and a transmitting user equipment apparatus.

### BACKGROUND

In certain wireless communication systems, a type 1 or type 2 configured grant ("CG") provides a set of resources in a periodic manner for multiple sidelink ("SL") transmissions. For type 1 and 2 CGs, whether a SL grant is used for initial transmission or retransmission within the periodicity is determined by the user equipment ("UE") implementation. According to 3GPP agreements, the transport block ("TB") stored in a SL process that has been transmitted in CG resources of a period may not use the CG resources of the next period associated with the same hybrid automatic repeat request ("HARQ") process.

R1- 1912552 is a 3GPP discussion document titled "Mode 1 resource allocation schemes on sidelink" submitted by ZTE & Sanechips at TSG RAN WG1 #99, in Reno, Nevada, USA, on 18th November 2019, and discusses some further details of dynamic and semi-static resource allocation of mode 1 scheme.

R1-2000546 is a 3GPP discussion document titled "Remaining issues on mode 1 resource allocation for NR V2X" submitted by Fujitsu at TSG RAN WG1 #100 e-Meeting on 24th February 2020, and proposes that for configured grant, if there is no need to prevent the case where a transmitter UE receives ACK via PSFCH earlier than the ReTx resources scheduled by a DCI, then the UE does not perform retransmission on the ReTx resources and transmits ACK on the PUCCH resource indicated by the DCI.

### BRIEF SUMMARY

The invention is defined by the appended claims. Claim 1 defines a method and claim 11 defines a transmitting user equipment apparatus. In the following, any method and/or apparatus referred to as embodiments but nevertheless do not fall within the scope of the appended claims are to be understood as examples helpful in understanding the invention.

Disclosed are methods, apparatuses, and systems for managing HARQ buffers for sidelink configured grants. In one embodiment, physical sidelink feedback channel ("PSFCH") determines whether to retransmit pending TBs on next CG resource within a period. In one embodiment, if PSFCH is NACK, then the TB is retransmitted on the next CG resource. Otherwise, in one embodiment, if PSFCH is ACK, then further (re)transmissions of the TB within the period are stopped and the CG resources are used for retransmission of another pending TBs for another HARQ process and/or the remaining CG resources are used for transmissions of another TB. If PSFCH is not received yet or there is a discontinuous transmission ("DTX") where no feedback is transmitted/received, the TB is retransmitted on the next CG resource within the period and/or the buffer content is saved, but not transmitted.

In one embodiment, the subject matter recited herein is directed to a UE that starts a timer upon having sent a negative acknowledgement ("NACK") on the physical uplink control channel ("PUCCH") to the gNB for the transmission of a TB on CG resource(s) within a period. At the next CG resource(s) of the SL CG for the same HARQ process while the timer is running, UE shall not generate a new TB for the HARQ process.

According to one implementation of the embodiment UE shall for cases when the timer is running retransmit the TB pending in the HARQ buffer on subsequent CG resource(s) associated with the same HARQ process. In case the timer is not running at the next CG resource of the SL CG for the same HARQ process, the UE shall consider the new data indicator ("NDI") to have been toggled for the HARQ process and generate a new TB, if SL data is available for transmission. The timer is stopped upon receiving a SL grant indicating a new transmission for the same HARQ process. For cases when the SL grant indicates a retransmission for the same HARQ process (e.g., NDI is non-toggled, or radio network temporary identifier ("RNTI") indicates that this is a retransmission) the timer may be started/restarted.

In another embodiment, a new timer is started at the initial transmission of a TB. The transmission could be an initial transmission on a dynamically scheduled SL resource or on a configured grant resource. The timer value is set such that it allows for certain number of retransmissions of the TB which are still within the PDB of the TB. Upon reception of an ACK for the (re)transmission of the TB, the UE considers the timer as expired, e.g., no further retransmission is required. The reception of a SL grant (DCI) indicating a new transmission for the same HARQ process stops the timer, e.g., the corresponding SL transmission will (re)start the timer. Upon expiry of the timer the UE may flush the HARQ buffer of the associated HARQ process and consider the HARQ process as available for another SL transmission, e.g., UE may generate a new TB and store for transmission in the HARQ buffer/process.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a schematic block diagram illustrating one embodiment of a wireless communication system for managing hybrid automatic repeat request buffers for sidelink configured grants;
Figure 1B is an example illustration of a sidelink configured grant for managing hybrid automatic repeat request buffers for sidelink configured grants;
Figure 2 is a block diagram illustrating one embodiment of a user equipment apparatus that may be used for managing hybrid automatic repeat request buffers for sidelink configured grants;
Figure 3 is a block diagram illustrating one embodiment of a network equipment apparatus that may be used for managing hybrid automatic repeat request buffers for sidelink configured grants; and
Figure 4 is a flowchart diagram illustrating one embodiment of a method for managing hybrid automatic repeat request buffers for sidelink configured grants.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for managing HARQ buffers for sidelink configured grants. It is not clear, according to the current specified behavior, when the UE flushes the HARQ transmission buffer of a SL HARQ process respectively when the UE generates a new TB for a HARQ process in particular for the case of SL CGs. For the CG Type 1 and 2, whether a SL grant is used for initial transmission or retransmission within the periodicity is up to the UE implementation. According to 3GPP agreements, the TB stored in a SL process that has been transmitted in CG resources of a period cannot use the CG resources of the next period associated with the same HARQ process.

For example, if a TB has been transmitted in the first period of a CG from a SL process associated with HARQ Process ID = 1, the TB cannot be retransmitted in the second period of the CG of the same SL process. Thus, the Tx UE may replace the old TB by new TB in the HARQ Tx buffer of the SL process associated to a HARQ Process ID before the next CG resource associated to the same HARQ Process ID or the Tx UE may keep the pending TB in the HARQ buffer for potential retransmissions, e.g., scheduled dynamically by the gNB, and ignore the next CG resource(s) associated to the HARQ Process ID (skip the allocated CG resource(s) for SL transmission).

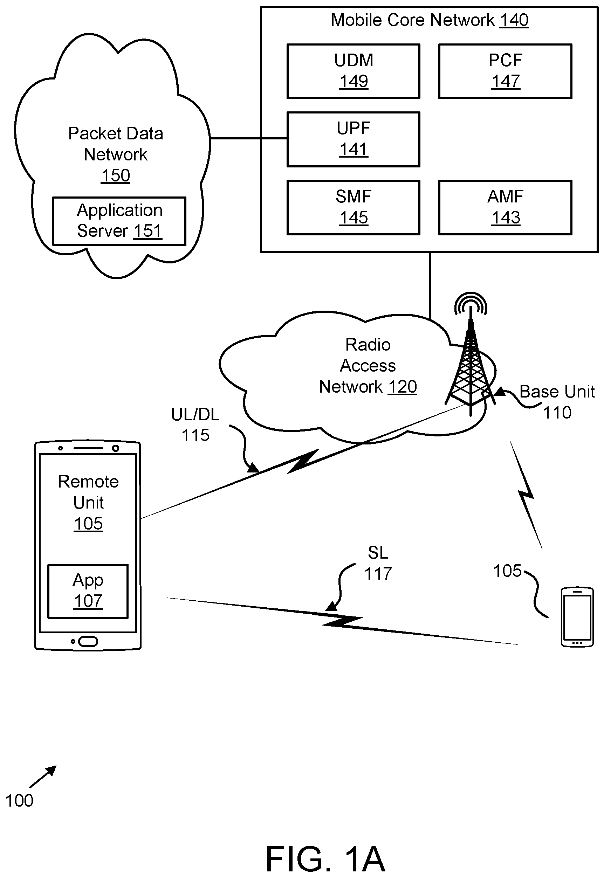

Figure 1A depicts a wireless communication system 100 supporting HARQ buffer management for SL configured grants, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 110 with which the remote unit 105 communicates using wireless communication links 115. Even though a specific number of remote units 105, base units 110, wireless communication links 115, RANs 120, and mobile core networks 140 are depicted in Figure 1A, one of skill in the art will recognize that any number of remote units 105, base units 110, wireless communication links 115, RANs 120, and mobile core networks 140 may be included in the wireless communication system 100.

In one implementation, the RAN 120 is compliant with the 5G system specified in the 3GPP specifications. In another implementation, the RAN 120 is compliant with the LTE system specified in the 3GPP specifications. More generally, however, the wireless communication system 100 may implement some other open or proprietary communication network, for example WiMAX, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the base units 110 in the RAN 120 via uplink ("UL") and downlink ("DL") communication signals. Furthermore, the UL and DL communication signals may be carried over the wireless communication links 115. Here, the RAN 120 is an intermediate network that provides the remote units 105 with access to the mobile core network 140.

In some embodiments, the remote units 105 communicate with an application server 151 via a network connection with the mobile core network 140. For example, an application 107 (e.g., web browser, media client, telephone/VoIP application) in a remote unit 105 may trigger the remote unit 105 to establish a PDU session (or other data connection) with the mobile core network 140 via the RAN 120. The mobile core network 140 then relays traffic between the remote unit 105 and the application server 151 in the packet data network 150 using the PDU session. Note that the remote unit 105 may establish one or more PDU sessions (or other data connections) with the mobile core network 140. As such, the remote unit 105 may concurrently have at least one PDU session for communicating with the packet data network 150 and at least one PDU session for communicating with another data network (not shown).

The base units 110 may be distributed over a geographic region. In certain embodiments, a base unit 110 may also be referred to as an access terminal, an access point, a base, a base station, a Node-B, an eNB, a gNB, a Home Node-B, a relay node, a RAN node, or by any other terminology used in the art. The base units 110 are generally part of a radio access network ("RAN"), such as the RAN 120, that may include one or more controllers communicably coupled to one or more corresponding base units 110. These and other elements of radio access network are not illustrated but are well known generally by those having ordinary skill in the art. The base units 110 connect to the mobile core network 140 via the RAN 120.

The base units 110 may serve a number of remote units 105 within a serving area, for example, a cell or a cell sector, via a wireless communication link 115. The base units 110 may communicate directly with one or more of the remote units 105 via communication signals. Generally, the base units 110 transmit DL communication signals to serve the remote units 105 in the time, frequency, and/or spatial domain. Furthermore, the DL communication signals may be carried over the wireless communication links 115. The wireless communication links 115 may be any suitable carrier in licensed or unlicensed radio spectrum. The wireless communication links 115 facilitate communication between one or more of the remote units 105 and/or one or more of the base units 110. Note that during NR-U operation, the base unit 110 and the remote unit 105 communicate over unlicensed radio spectrum.

In one embodiment, the mobile core network 140 is a 5G core ("5GC") or the evolved packet core ("EPC"), which may be coupled to a packet data network 150, like the Internet and private data networks, among other data networks. A remote unit 105 may have a subscription or other account with the mobile core network 140. Each mobile core network 140 belongs to a single public land mobile network ("PLMN"). The present disclosure is not intended to be limited to the implementation of any particular wireless communication system architecture or protocol.

The mobile core network 140 includes several network functions ("NFs"). As depicted, the mobile core network 140 includes multiple user plane functions ("UPFs") 141. The mobile core network 140 also includes multiple control plane functions including, but not limited to, an Access and Mobility Management Function ("AMF") 143 that serves the RAN 120, a Session Management Function ("SMF") 145, a Policy Control Function ("PCF") 147, and a Unified Data Management function ("UDM") 149. In certain embodiments, the mobile core network 140 may also include an Authentication Server Function ("AUSF"), a Network Repository Function ("NRF") (used by the various NFs to discover and communicate with each other over APIs), or other NFs defined for the 5GC.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. A network instance may be identified by a S-NSSAI, while a set of network slices for which the remote unit 105 is authorized to use is identified by NSSAI. In certain embodiments, the various network slices may include separate instances of network functions, such as the SMF 145 and UPF 141. In some embodiments, the different network slices may share some common network functions, such as the AMF 143. The different network slices are not shown in Figure 1A for ease of illustration, but their support is assumed.

Although specific numbers and types of network functions are depicted in Figure 1A, one of skill in the art will recognize that any number and type of network functions may be included in the mobile core network 140. Moreover, where the mobile core network 140 is an EPC, the depicted network functions may be replaced with appropriate EPC entities, such as an MME, S-GW, P-GW, HSS, and the like. In certain embodiments, the mobile core network 140 may include a AAA server.

In various embodiments, the remote units 105 may communicate directly with each other (e.g., device-to-device communication) using sidelink ("SL") communication signals 117. Vehicle-to-everything ("V2X") is one example of SL communication. Here, V2X transmissions may occur on SL resources on the PC5 interface. The remote unit 105 may be provided with different SL communication resources for different V2X modes. Mode-1 corresponds to a new radio ("NR") network-scheduled V2X communication mode. Mode-2 corresponds to a UE autonomous scheduled V2X communication mode.

While Figure 1A depicts components of a 5G RAN and a 5G core network, the described embodiments apply to other types of communication networks and RATs, including IEEE 802.11 variants, GSM, GPRS, UMTS, LTE variants, CDMA 2000, Bluetooth, ZigBee, Sigfoxx, and the like. For example, in an LTE variant involving an EPC, the AMF 141 may be mapped to an MME, the SMF mapped to a control plane portion of a PGW and/or to an MME, the UPF map to an SGW and a user plane portion of the PGW, the UDM/UDR maps to an HSS, etc.

In the following descriptions, the term "gNB" is used for the base station but it is replaceable by any other radio access node, e.g., RAN node, eNB, BS, eNB, gNB, AP, NR, etc. Further the operations are described mainly in the context of 5G NR. However, the proposed solutions/methods are also equally applicable to other mobile communication systems supporting beamforming and/or beams-based cell-sectors.

A dynamic SL grant may provide resources for one or multiple SL transmissions of a single TB. In certain embodiments, a CG of type-1 and/or type-2 provides a set of resources in a periodic manner for multiple SL transmissions. In such an embodiment, a UE decides which TB to transmit in each of the occasions indicated by a given CG. Current standards do not specify whether different transmissions of a TB can take place across multiple CGs. Other restrictions on what can be transmitted in a given CG (e.g., based on quality of service ("QoS"), destination UE, etc.) may be determined.

In certain embodiments, an NR SL does not support performing different transmissions of a TB using different CGs. For reporting SL HARQ-ACK to the gNB, for dynamic SL grants and CGs of type-2 in SL, the Rel-15 procedure and signaling for DL HARQ-ACK may be reused for the purpose of selecting PUCCH offset/resource and format in UL. In various embodiments, the configuration for SL is separate from Uu link for a UE. Current standards do not specify how to indicate timing of transmission in PUCCH, including whether physical or logical slots are used. For CG type-1 in SL, radio resource control ("RRC") is used to configure PUCCH offset/resource and format in UL (if supported).

In one embodiment, a CG for SL can carry a TB for which SL HARQ FB is enabled or disabled. For a CG, if there is a possibility to carry a TB with SL HARQ FB being enabled, there may be a corresponding physical sidelink feedback channel ("PSFCH") configuration. Moreover, a TB with SL HARQ FB may be enabled and can be carried by a CG if there is a corresponding PSFCH configuration for the CG.

In one embodiment, the mapping between the values of HARQ process number ("HPN") signaled in downlink control information ("DCI") and HPN signaled in sidelink control information ("SCI") is fixed for a TB and is determined according to UE implementation. For dynamic grant, the toggling of NDI in DCI may be used as the toggling of NDI in SCI for the first SL transmission scheduled by the DCI. The SCI for the remaining transmissions scheduled by the DCI, if any, may have the NDI untoggled with respect to the first SL transmission. Current standards do not specify NDI in SCI for PUCCH ACK-NACK error cases.

In one embodiment, a HARQ process ID for each transmission in a resource corresponding to a SL CG is determined based on the formula used for UL CGs. In such an embodiment, the mapping with the values of HPN in SCI is fixed for a TB and is determined according to UE implementation. It is noteworthy that this may correspond to the HARQ process ID for the interaction between the gNB and the UE, if any distinction is made.

In one embodiment, one new TB can be transmitted in one period of the CG. Current standards do not address issues with retransmission spanning multiple periods. The DCI scheduling the retransmissions may use the HARQ process ID corresponding to the first transmission of the TB. In some embodiments, multiple HARQ ID processes for a given SL CG may be present.

In one embodiment, the slots for SL transmission for CG type-1 are determined using the UL formula in 38.321 with certain changes that include using slot-level granularity instead of symbol-level granularity (i.e., remove *numberOfSymbolsPerSlot,* "symbol number in the slot", S in the formula), *periodicity* is in number of slots, and *timeDomainOffset* is expressed in number of slots. Current standards do not specify the use of frame indexing (e.g., system frame number ("SFN"), or virtual frame number) and/or whether logical or physical slots are used.

In one embodiment, for long term evolution ("LTE") Uu scheduling NR, the slots for SL transmission are determined in the same way as for SL CG type-1 when NR Uu schedules NR SL (SFN=0 refers to the LTE DL carrier). Furthermore, for CG, the periodicities supported may be the same as for periodic resource reservation in Mode-2 (i.e., the list given by *SL-ResourceReservePeriod-rl 6*)*.* In one embodiment, RAN1 assumes that, if there is a problem with collision of HARQ process numbers, the issue will be addressed by RAN2.

In one embodiment, it is not clear according to the current specified behavior, when a UE flushes the HARQ transmission buffer of a SL HARQ process respectively when the UE generates a new TB for a HARQ process in particular for the case of SL CGs. For the CG Type 1 and 2, whether a SL grant is used for initial transmission or retransmission within the periodicity is up to UE implementation. According to 3GPP agreements, the TB stored in a SL process that has been transmitted in CG resources of a period cannot use the CG resources of the next period associated with the same HARQ process.

For example, if a TB has been transmitted in the first period of a CG from a SL process associated with HARQ Process ID = 1, the TB cannot be retransmitted in the second period of the CG of the same SL process. Thus, a Tx UE may replace the old TB by new TB in the HARQ Tx buffer of the SL process associated to a HARQ Process ID before the next CG resource associated to the same HARQ Process ID or the Tx UE may keep the pending TB in the HARQ buffer for potential retransmissions, e.g., scheduled dynamically by the gNB, and ignore the next CG resource(s) associated to the HARQ Process ID (skip the allocated CG resource(s) for SL transmission).

In existing solutions, the Tx UE may use a ConfiguredGrantTimer as defined for UL CGs in NR Rel-15 in order to ensure that retransmissions scheduled by the gNB are possible for a TB pending in HARQ buffer, e.g., the Tx UE does not generate a new TB at a next CG resource and stores it in the HARQ buffer with a pending TB. However, since there may be significant differences between UL transmission on NR Uu and SL transmissions for NR V2X, applying the same behavior for the ConfiguredGrantTimer as defined for NR UL for NR V2X may not lead to an efficient operation.

For example, for the NR V2X case, the Tx UE may know whether a TB was correctly received by the receiving ("Rx") UE based on feedback sent on PSFCH. For the NR Uu case, the CGT timer is introduced because there is no HARQ feedback for UL HARQ protocol, e.g., asynchronous HARQ protocol. For NR V2X however, the Tx UE may receive HARQ feedback from the Rx UE (PSFCH), if configured, and also physical downlink control channel ("PDCCHs") (SL grants) from the gNB. Therefore, optimized behavior for determining when to flush a HARQ buffer and/or generate a new TB for CG resource may be necessary that considers both control channels, e.g., PSFCH from the Rx UE and PDCCH from the gNB.

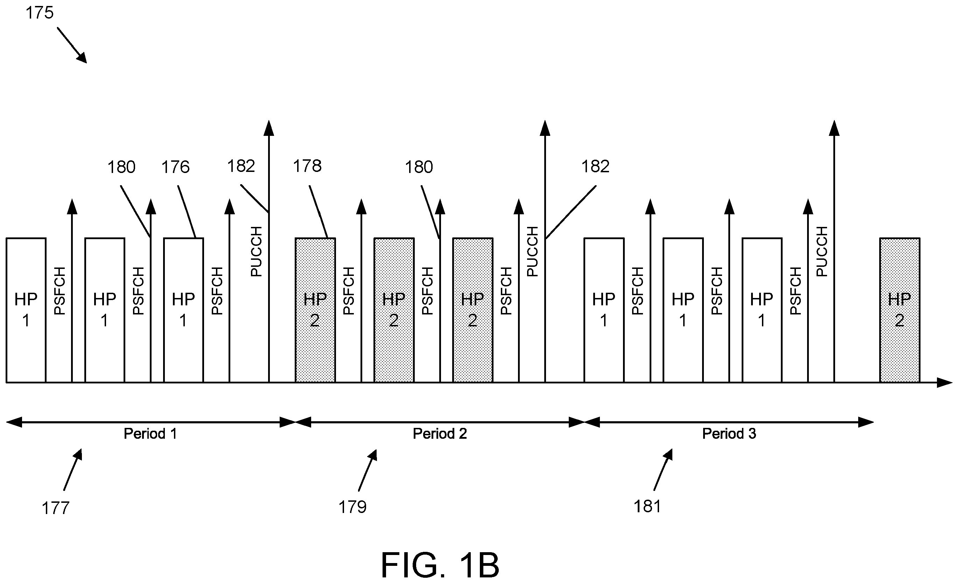

Figure 1B depicts an example illustration 175 of an SL CG. In the example shown in Figure 1B, three CG resources are allocated per period (e.g., period 1 177, period 2 179, or period 3 181)and two different HARQ processes ("HPs") (HP1 176 and HP2 178) are used for the SL CG. After each CG resource, in one embodiment, a PSFCH 180 is allocated for the transmission of HARQ feedback from the Rx UE. After the last CG resource within a period, in certain embodiments, PUCCH 182 resources are allocated in order to send HARQ feedback information to the gNB indicating whether the transmission was successful or not.

According to recent 3GPP agreements, a UE (e.g., a Tx UE) may be allocated SL resources semi-persistently by means of a SL CG. Similar to NR Uu, there may be two types of CGs, type 1 and type 2. SL resources may be allocated with a given configured periodicity, e.g., also referred to as period 1 177, period 2 179, or period 3 181. Within each period (e.g., period 1 177, period 2 179, or period 3 181)of SL CG, up to three CG resources may be allocated by the gNB. The HARQ process ID for each transmission in a SL resource corresponding to a SL CG may be determined based on a formula used for UL configured grants in TS38.321.

According to a first solution, the UE starts a timer upon having sent a NACK on a PUCCH 182 to the gNB, the PUCCH resources 182 being associated with SL CG resource(s). The PUCCH 182 may be sent in response to having performed SL transmission(s) on CG resource(s) allocated by a SL CG, for which the successful reception was not acknowledged by the corresponding receiving UE (e.g., PSFCH 180). In one embodiment, at the next CG resource of the SL CG for the same HARQ process (e.g., HP1 176 or HP2 178) when the timer is running, the UE shall not generate a new TB for the HARQ process HP1 176 or HP2 178. The purpose of the timer, in various embodiments, is to ensure that the TB stored in the HARQ buffer is not overwritten by a newly generated TB even though a further retransmission may be scheduled by the gNB in response to the reception of the NACK on PUCCH 182.

According to one implementation of the embodiment, the UE shall, for cases when the timer is running, retransmit the TB pending in the HARQ buffer on subsequent CG resource(s) associated with the same HARQ process (e.g., HP1 176 or HP2 178). In case the timer is not running at the next CG resource of the SL CG for the same HARQ process (e.g., HP1 176 or HP2 178), the UE may consider the NDI to have been toggled for the HARQ process (e.g., HP1 176 or HP2 178) and generate a new TB (if SL data is available for transmission). The timer, in some embodiments, is stopped upon receiving a SL CG indicating a new transmission for the same HARQ process (e.g., HP1 176 or HP2 178). For cases when the SL CG indicates a retransmission for the same HARQ process (e.g., HP1 176 or HP2 178) such as, for example, an NDI non-toggled or RNTI indicating that this is a retransmission, the timer may be started/restarted.

In an embodiment where a Tx UE sends an HARQ ACK on the PUCCH resources 182 to the gNB, the PUCCH resources 182 being associated with a SL CG, the timer is not started. The PUCCH 182 may be sent in response to having performed SL transmission(s) on CG resource(s) allocated by a SL CG, for which the successful reception was acknowledged by the corresponding receiving UE(s). According to some alternative implementations of the embodiment, the Tx UE checks whether a SL grant indicating a retransmission for the same HARQ process (e.g., HP1 176 or HP2 178) has been received until a predefined time before the next CG resource of the same HARQ process (e.g., HP1 176 or HP2 178), e.g., in the next period (e.g., period 1 177, period 2 179, or period 3 181)), upon having sent a NACK on PUCCH 182, e.g., after the last CG resource of a period (e.g., period 1 177, period 2 179, or period 3 181).

For cases when an SL grant requesting a retransmission has been received, the Tx UE may not generate a new TB at the next CG resource for the same HARQ process (e.g., HP1 176 or HP2 178), for example, a first CG resource (e.g., PSSCH) within a period (e.g., period 1 177, period 2 179, or period 3 181). For cases when no SL grant requesting a retransmission has been received until the predefined time before the next CG resource, e.g., first CG resource of next period (e.g., period 1 177, period 2 179, or period 3 181)for the same HARQ process (e.g., HP1 176 or HP2 178), the UE will generate a new TB. Taking figure 1B as an example, the UE will, according to this implementation upon having sent a NACK on PUCCH 182 in period 1 177, determine whether the gNB sends a SL grant (e.g., DCI) requesting a retransmission for HARQ process 1 176 until a predefined offset (e.g., in number of slots/ms) before the start of period 3 181 (associated with HARQ process 1 176) in order to decide whether to generate a new TB for the first CG resource within period 3 181.

According to another aspect of the embodiment, the Tx UE starts a timer upon having sent a TB on a CG resource. The timer may be associated with the corresponding associated HARQ process (e.g., HP1 176 or HP2 178). As long as the timer is running, the Tx UE does not generate a new TB on the next CG resource of the same HARQ process (e.g., HP1 176 or HP2 178), e.g., a new TB is only generated when the timer is not running. Upon receiving an ACK on PSFCH 180 for the (re)transmission of the TB on a CG resource, the corresponding timer may be stopped. When receiving a NACK from the Rx UE on PSFCH 180, the timer may be either restarted or kept running. According to one implementation of the embodiment, the Tx UE may perform a retransmission of the pending TB on a next available CG resource for the same HARQ process (e.g., HP1 176 or HP2 178) when the timer is running.

According to a second solution, in one embodiment, the UE may retransmit a TB pending in the HARQ buffer for a HARQ process (e.g., HP1 176 or HP2 178) on the next CG resource of the same SL CG for the same HARQ process (e.g., HP1 176, or HP2 178) upon having received a NACK on the PSFCH 180 for the previous CG transmission within a period (e.g., period 1 177, period 2 179, or period 3 181). In a scenario where a UE has been configured with a SL CG (e.g., by the gNB), and within each period 177 of the SL CG, the UE may be allocated with multiple CG resources for which a corresponding PSFCH 180 for HARQ feedback may be allocated. In such an embodiment, the UE determines, based on the HARQ feedback received for a CG transmission within a period 177, the transmission behavior for the next CG resource within the same period (e.g., period 1 177, period 2 179, or period 3 181), e.g., whether to perform a retransmission/initial transmission or whether to not perform any SL transmission on the CG resource.

According to one implementation of the embodiment, the UE performs a retransmission on the next CG resource within a period (e.g., period 1 177, period 2 179, or period 3 181) for the same HARQ process (e.g., HP1 176, or HP2 178), if a NACK was received on PSFCH 180 for the previous CG transmission of the same HARQ process (e.g., HP1 176, or HP2 178) within the same period (e.g., period 1 177, period 2 179, or period 3 181). For cases when no feedback was received due to timing constraint, e.g., PSFCH resources 180 are occurring after the next CG resources within a period (e.g., period 1 177, period 2 179, or period 3 181) or time between PSFCH 180 and next CG resource (e.g., PSSCH) is too short to prepare for new TB/retransmission of pending TB, the UE may retransmit the TB on the next CG resources or alternatively keep the TB in the HARQ buffer but not perform a retransmission (skip the SL transmission on the next CG resource).

The assumption here, in one embodiment, is that there is some minimum processing time required between PSFCH 180 and a subsequent PSSCH for the same HARQ process (e.g., HP1 176, or HP2 178), e.g., time that is required by the UE to prepare a new TB for initial in subsequent CG resource respectively to prepare retransmission of pending TB. For cases when the time between the end of the last symbol of the last PSFCH 180 and the first symbol of the next CG resource for a SL CG for the same HARQ process (e.g., HP1 176, or HP2 178) is less than the defined minimum processing time, the Tx UE shall keep the TB in the HARQ buffer. The same behavior may be applied for cases when a DTX is received for a previous CG transmission within the period (e.g., period 1 177, period 2 179, or period 3 181)for the same HARQ process (e.g., HP1 176, or HP2 178).

In certain embodiments, for cases when an ACK is received for a CG transmission on PSFCH 180, the UE may refrain from performing any transmission on the next CG resource(s) of the SL CG within the same period (e.g., period 1 177, period 2 179, or period 3 181)forthe same HARQ process (e.g., HP1 176, or HP2 178) e.g., skipping the SL transmission on the next CG resource within the period (e.g., period 1 177, period 2 179, or period 3 181). According to another implementation, the UE may generate a new TB and perform an initial transmission on the next CG resource(s) of an SL CG within one period for cases when the previous CG transmission is a (re)transmission of a different TB which is acknowledged by the receiving UE, e.g., an ACK received on PSFCH 180.

According to a further implementation, the Tx UE may, in response to having received an ACK an PSFCH 180 for the transmission of a TB on a CG resource, transmit a TB on the next CG resource(s) within the same period (e.g., period 1 177, period 2 179, or period 3 181)and associated with the same HARQ process (e.g., HP1 176, or HP2 178) which is pending for retransmission from a different HARQ process (e.g., HP1 176, or HP2 178). The Tx UE may indicate in the SCI accompanying the PSSCH transmission on the CG resource(s) the HARQ process ID of the pending TB which is retransmitted. Essentially, in certain embodiments, the Tx UE uses two different HARQ processes (e.g., HP1 176, or HP2 178) within the same period (e.g., period 1 177, period 2 179, or period 3 181) for an SL transmission. Alternatively, in one embodiment, the Tx UE uses the remaining CG resources within one period (e.g., period 1 177, period 2 179, or period 3 181) upon having received an ACK on the PSFCH 180 for a previous CG transmission, e.g., for SL transmissions in the mode 2.

According to a third solution, a timer is started once the UE performs an SL transmission on an SL resource, e.g., SL resource may be dynamically allocated by the gNB or an SL CG resource. As long as the timer is running, in one embodiment, the UE does not generate a new TB for the same HARQ process (e.g., HP1 176, or HP2 178), e.g., overriding of TB that is stored in the HARQ buffer and that may be subject to further retransmission should be avoided. Upon expiry of the timer, in further embodiments, the UE uses the HARQ process (e.g., HP1 176, or HP2 178) for the transmission of a new TB, e.g., the UE may flush the HARQ buffer and generate a new TB and store it in the buffer. Upon reception of a HARQ ACK for the transmission of a TB, in various embodiments, the UE considers the associated timer as expired. In one embodiment, for cases when the UE has a CG resource for a HARQ process (e.g., HP1 176, or HP2 178) and the timer is not running for the HARQ process, the UE generates a new TB for the CG resource and/or HARQ process (e.g., HP1 176, or HP2 178).

According to a fourth solution, in one embodiment, a timer is only started at the initial transmission of a TB. The transmission, in certain embodiments, could be an initial transmission on a dynamically scheduled SL resource or on a CG resource. In one embodiment, the timer value is set such that it allows for a certain number of retransmissions of the TB which are still within the PDB of the TB. Upon reception of an ACK for the (re)transmission of the TB, in some embodiments, the UE considers the timer as expired, e.g., no further retransmissions are required. The reception of a SL grant (e.g., DCI) indicating a new transmission for the same HARQ process (e.g., HP1 176, or HP2 178), in certain embodiments, stops the timer, and, for example, the corresponding SL transmission will start the timer. In one embodiment, upon expiry of the timer, the UE flushes the HARQ buffer of the associated HARQ process (e.g., HP1 176, or HP2 178) and considers the HARQ process as available for another SL transmission, e.g., the UE may generate a new TB and store for transmission in the HARQ buffer and/or process (e.g., HP1 176, or HP2 178).

According to a fifth solution, in one embodiment, the TX UE continuously (re)transmits a generated TB on CG resources associated with the same HARQ process (e.g., HP1 176, or HP2 178) as long as the maximum number of retransmissions is not reached and/or the packet delay budget of the TB is not exceeded - even across different periods (e.g., period 1 177, period 2 179, or period 3 181) - unless an ACK has been received on PSFCH 180 from the Rx UE for the TB. According to one implementation of this embodiment, the Tx UE will also stop the (re)transmission of this TB once the gNB schedules with an SL grant (e.g., DCI) an initial transmission for the same HARQ process (e.g., HP1 176, or HP2 178). According to a further embodiment, the Tx UE stops the (autonomous) retransmission of a TB on CG resources associated with the same HARQ process (e.g., HP1 176, or HP2 178) upon having received an SL grant from the gNB (e.g., DCI), which schedules a retransmission of the TB for the same HARQ process (e.g., HP1 176, or HP2 178) dynamically. In certain embodiments, only further subsequent dynamically scheduled retransmission(s) of the TB may follow, e.g., no autonomous retransmissions of the TB performed by the Tx UE. For cases when there is no PUCCH 182 associated with the CG resource(s) of one period allocated to the Tx UE, UE may flush the corresponding HARQ Tx buffer at the beginning of the next period associated with the same HARQ process, e.g., before the first CG resource of the next period.

It should be noted that the solutions described above may be combined with a timer which is controlling the maximum transmission time of a TB, e.g., a timer value set according to the PDB value associated with the TB. Thus, multiple timers may be applied simultaneously.

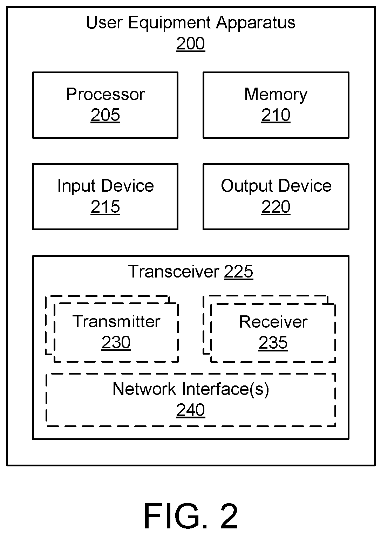

Figure 2 depicts a user equipment apparatus 200 that may be used for managing hybrid automatic repeat request buffers for sidelink configured grants. In various embodiments, the user equipment apparatus 200 is used to implement one or more of the solutions described above. The user equipment apparatus 200 may be one embodiment of the remote unit 105 and/or the UE 205, described above. Furthermore, the user equipment apparatus 200 may include a processor 205, a memory 210, an input device 215, an output device 220, and a transceiver 225.

In some embodiments, the input device 215 and the output device 220 are combined into a single device, such as a touchscreen. In certain embodiments, the user equipment apparatus 200 may not include any input device 215 and/or output device 220. In various embodiments, the user equipment apparatus 200 may include one or more of: the processor 205, the memory 210, and the transceiver 225, and may not include the input device 215 and/or the output device 220.

The processor 205, in one embodiment, may include any known controller capable of executing computer-readable instructions and/or capable of performing logical operations. For example, the processor 205 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 205 executes instructions stored in the memory 210 to perform the methods and routines described herein. The processor 205 is communicatively coupled to the memory 210, the input device 215, the output device 220, and the transceiver 225.

In various embodiments, the processor 205 controls the user equipment apparatus 200 to implement UE behavior according to one or more of the above described embodiments.

The memory 210, in one embodiment, is a computer readable storage medium. In some embodiments, the memory 210 includes volatile computer storage media. For example, the memory 210 may include a RAM, including dynamic RAM ("DRAM"), synchronous dynamic RAM ("SDRAM"), and/or static RAM ("SRAM"). In some embodiments, the memory 210 includes non-volatile computer storage media. For example, the memory 210 may include a hard disk drive, a flash memory, or any other suitable non-volatile computer storage device. In some embodiments, the memory 210 includes both volatile and non-volatile computer storage media.

In some embodiments, the memory 210 stores data related to managing hybrid automatic repeat request buffers for sidelink configured grants. For example, the memory 210 may store various parameters, configurations, policies, and the like as described above. In certain embodiments, the memory 210 also stores program code and related data, such as an operating system or other controller algorithms operating on the apparatus 200.

The input device 215, in one embodiment, may include any known computer input device including a touch panel, a button, a keyboard, a stylus, a microphone, or the like. In some embodiments, the input device 215 may be integrated with the output device 220, for example, as a touchscreen or similar touch-sensitive display. In some embodiments, the input device 215 includes a touchscreen such that text may be input using a virtual keyboard displayed on the touchscreen and/or by handwriting on the touchscreen. In some embodiments, the input device 215 includes two or more different devices, such as a keyboard and a touch panel.

The output device 220, in one embodiment, is designed to output visual, audible, and/or haptic signals. In some embodiments, the output device 220 includes an electronically controllable display or display device capable of outputting visual data to a user. For example, the output device 220 may include, but is not limited to, an LCD display, an LED display, an OLED display, a projector, or similar display device capable of outputting images, text, or the like to a user. As another, non-limiting, example, the output device 220 may include a wearable display separate from, but communicatively coupled to, the rest of the user equipment apparatus 200, such as a smart watch, smart glasses, a heads-up display, or the like. Further, the output device 220 may be a component of a smart phone, a personal digital assistant, a television, a table computer, a notebook (laptop) computer, a personal computer, a vehicle dashboard, or the like.

In certain embodiments, the output device 220 includes one or more speakers for producing sound. For example, the output device 220 may produce an audible alert or notification (e.g., a beep or chime). In some embodiments, the output device 220 includes one or more haptic devices for producing vibrations, motion, or other haptic feedback. In some embodiments, all, or portions of the output device 220 may be integrated with the input device 215. For example, the input device 215 and output device 220 may form a touchscreen or similar touch-sensitive display. In other embodiments, the output device 220 may be located near the input device 215.

The transceiver 225 communicates with one or more network functions of a mobile communication network via one or more access networks. The transceiver 225 operates under the control of the processor 205 to transmit messages, data, and other signals and also to receive messages, data, and other signals. For example, the processor 205 may selectively activate the transceiver 225 (or portions thereof) at particular times in order to send and receive messages.

The transceiver 225 includes at least transmitter 230 and at least one receiver 235. One or more transmitters 230 may be used to provide UL communication signals to a base unit 110, such as the UL transmissions described herein. Similarly, one or more receivers 235 may be used to receive DL communication signals from the base unit 110, as described herein. Although only one transmitter 230 and one receiver 235 are illustrated, the user equipment apparatus 200 may have any suitable number of transmitters 230 and receivers 235. Further, the transmitter(s) 230 and the receiver(s) 235 may be any suitable type of transmitters and receivers. In one embodiment, the transceiver 225 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 225, transmitters 230, and receivers 235 may be implemented as physically separate components that access a shared hardware resource and/or software resource, such as for example, the network interface 240.

In various embodiments, one or more transmitters 230 and/or one or more receivers 235 may be implemented and/or integrated into a single hardware component, such as a multi-transceiver chip, a system-on-a-chip, an ASIC, or other type of hardware component. In certain embodiments, one or more transmitters 230 and/or one or more receivers 235 may be implemented and/or integrated into a multi-chip module. In some embodiments, other components such as the network interface 240 or other hardware components/circuits may be integrated with any number of transmitters 230 and/or receivers 235 into a single chip. In such embodiment, the transmitters 230 and receivers 235 may be logically configured as a transceiver 225 that uses one more common control signals or as modular transmitters 230 and receivers 235 implemented in the same hardware chip or in a multi-chip module.

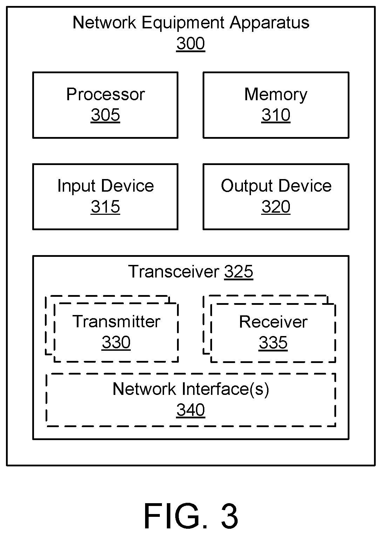

Figure 3 depicts a network equipment apparatus 300 that may be used for managing hybrid automatic repeat request buffers for sidelink configured grants, according to embodiments of the disclosure. The network equipment apparatus 300 may be one embodiment of the base unit 110 or RAN node, described above. Furthermore, the base network equipment apparatus 300 may include a processor 305, a memory 310, an input device 315, an output device 320, and a transceiver 325. In some embodiments, the input device 315 and the output device 320 are combined into a single device, such as a touchscreen. In certain embodiments, the network equipment apparatus 300 may not include any input device 315 and/or output device 320. In various embodiments, the network equipment apparatus 300 may include one or more of: the processor 305, the memory 310, and the transceiver 325, and may not include the input device 315 and/or the output device 320.

The processor 305, in one embodiment, may include any known controller capable of executing computer-readable instructions and/or capable of performing logical operations. For example, the processor 305 may be a microcontroller, a microprocessor, a CPU, a GPU, an auxiliary processing unit, a FPGA, or similar programmable controller. In some embodiments, the processor 305 executes instructions stored in the memory 310 to perform the methods and routines described herein. The processor 305 is communicatively coupled to the memory 310, the input device 315, the output device 320, and the transceiver 325.

In various embodiments, the network equipment apparatus 300 is a RAN node (e.g., gNB), as described herein. Here, the processor 305 controls the network equipment apparatus 300 to perform the above described behaviors. For example, the processor 305 may receive PSFCH content, retransmit a TB on next CG resource in response to the PSFCH content comprising a NACK, and cease transmissions of the TB within a CG period in response to the PSFCH content comprising an ACK.

The memory 310, in one embodiment, is a computer readable storage medium. In some embodiments, the memory 310 includes volatile computer storage media. For example, the memory 310 may include a RAM, including dynamic RAM ("DRAM"), synchronous dynamic RAM ("SDRAM"), and/or static RAM ("SRAM"). In some embodiments, the memory 310 includes non-volatile computer storage media. For example, the memory 310 may include a hard disk drive, a flash memory, or any other suitable non-volatile computer storage device. In some embodiments, the memory 310 includes both volatile and non-volatile computer storage media.

In some embodiments, the memory 310 stores data related to managing hybrid automatic repeat request buffers for sidelink configured grants. For example, the memory 310 may store various parameters, configurations, policies, and the like as described above. In certain embodiments, the memory 310 also stores program code and related data, such as an operating system or other controller algorithms operating on the network equipment apparatus 300.

The input device 315, in one embodiment, may include any known computer input device including a touch panel, a button, a keyboard, a stylus, a microphone, or the like. In some embodiments, the input device 315 may be integrated with the output device 320, for example, as a touchscreen or similar touch-sensitive display. In some embodiments, the input device 315 includes a touchscreen such that text may be input using a virtual keyboard displayed on the touchscreen and/or by handwriting on the touchscreen. In some embodiments, the input device 315 includes two or more different devices, such as a keyboard and a touch panel.

The output device 320, in one embodiment, is designed to output visual, audible, and/or haptic signals. In some embodiments, the output device 320 includes an electronically controllable display or display device capable of outputting visual data to a user. For example, the output device 320 may include, but is not limited to, an LCD display, an LED display, an OLED display, a projector, or similar display device capable of outputting images, text, or the like to a user. As another, non-limiting, example, the output device 320 may include a wearable display separate from, but communicatively coupled to, the rest of the network equipment apparatus 300, such as a smart watch, smart glasses, a heads-up display, or the like. Further, the output device 320 may be a component of a smart phone, a personal digital assistant, a television, a table computer, a notebook (laptop) computer, a personal computer, a vehicle dashboard, or the like.

In certain embodiments, the output device 320 includes one or more speakers for producing sound. For example, the output device 320 may produce an audible alert or notification (e.g., a beep or chime). In some embodiments, the output device 320 includes one or more haptic devices for producing vibrations, motion, or other haptic feedback. In some embodiments, all, or portions of the output device 320 may be integrated with the input device 315. For example, the input device 315 and output device 320 may form a touchscreen or similar touch-sensitive display. In other embodiments, the output device 320 may be located near the input device 315.

The transceiver 325 includes at least transmitter 330 and at least one receiver 335. One or more transmitters 330 may be used to communicate with the UE, as described herein. Similarly, one or more receivers 335 may be used to communicate with network functions in the PLMN and/or RAN, as described herein. Although only one transmitter 330 and one receiver 335 are illustrated, the network equipment apparatus 300 may have any suitable number of transmitters 330 and receivers 335. Further, the transmitter(s) 325 and the receiver(s) 330 may be any suitable type of transmitters and receivers.

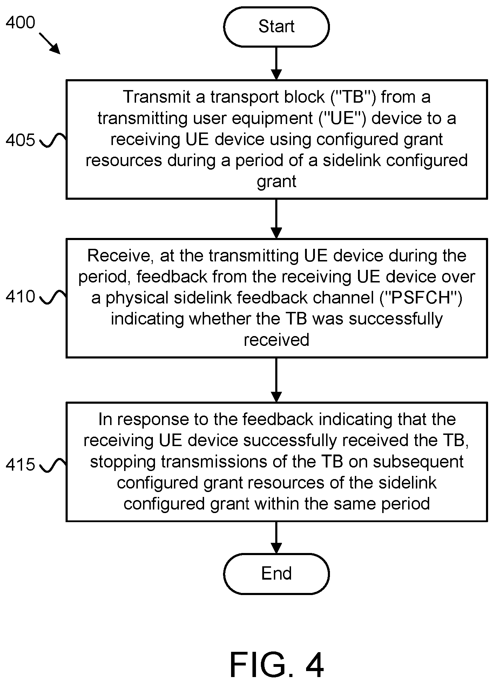

Figure 4 is a flowchart diagram of a method 400 for managing hybrid automatic repeat request buffers for sidelink configured grants. The method 400 may be performed by a UE, such as the remote unit 105 and/or the user equipment apparatus 200. In some embodiments, the method 400 may be performed by a processor executing program code, for example, a microcontroller, a microprocessor, a CPU, a GPU, an auxiliary processing unit, a FPGA, or the like.

The method 400 includes transmitting 405 a transport block ("TB") from a transmitting user equipment ("UE") device to a receiving UE device using configured grant resources during a period of a sidelink configured grant. The method 400 includes receiving 410, at the transmitting UE device during the period, feedback from the receiving UE device over a physical sidelink feedback channel ("PSFCH") indicating whether the TB was successfully received. The method 400 includes, in response to the feedback indicating that the receiving UE device successfully received the TB, stopping 415 transmissions of the TB on subsequent configured grant resources of the sidelink configured grant within the same period. The method 400 ends.

A first method for managing hybrid automatic repeat request buffers for sidelink configured grants is disclosed. A first method, in one embodiment, includes transmitting a transport block ("TB") from a transmitting user equipment ("UE") device to a receiving UE device using configured grant resources during a period of a sidelink configured grant. The first method, in certain embodiments, includes receiving, at the transmitting UE device during the period, feedback from the receiving UE device over a physical sidelink feedback channel ("PSFCH") indicating whether the TB was successfully received. In one embodiment, the first method includes, in response to the feedback indicating that the receiving UE device successfully received the TB, stopping transmissions of the TB on subsequent configured grant resources of the sidelink configured grant within the same period.

The first method, in one embodiment, includes, in response to the feedback indicating that the receiving UE device successfully received the TB, retransmitting a pending TB from a different hybrid automatic repeat request ("HARQ") process during the period of the sidelink configured grant. In one embodiment, the first method includes indicating within channel state information for the transmitting UE device an identifier for the HARQ process of the pending TB that is retransmitted.

The first method, in one embodiment, includes generating a new TB and performing an initial transmission of the new TB on next configured grant resources during the period of the sidelink configured grant in response to the feedback indicating that the receiving UE device successfully received the retransmitted TB. In some embodiments, the first method includes, in response to the feedback indicating that the receiving UE device successfully received the TB, using remaining configured grant resources for the period of the sidelink configured grant for transmitting a different TB.

In one embodiment, the first method includes retransmitting the TB on next configured grant resources during the period of the sidelink configured grant in response to the feedback indicating that the receiving UE device did not successfully receive the TB. In one embodiment, the first method includes retransmitting the TB on next configured grant resources in response to not receiving any feedback from the receiving UE device over the PSFCH.

In one embodiment, the first method includes buffering the TB in a HARQ buffer in response to not receiving any feedback from the receiving UE device over the PSFCH and in response to a time between an end of a last symbol of the PFSCH and a first symbol of a next configured grant resource for a HARQ process being less than a minimum processing time. In one embodiment, the first method includes, in response to the feedback indicating that the receiving UE device did not successfully receive the TB, sending an indication to a network entity of a mobile wireless communication network that provides the sidelink configured grant that the receiving UE device did not successfully receive the TB, the TB buffered for retransmission; starting a timer associated with retransmissions of the TB; while the timer is running, preventing new TBs from being generated and overwriting the TB in the buffer and retransmitting the buffered TB on subsequent configured grant resources until one of the timer expires and the feedback indicates that the receiving UE device successfully received the TB.

In one embodiment, the first method includes retransmitting the TB in response to receiving a retransmission grant for the TB within a predefined time before a subsequent configured grant resource. In one embodiment, the first method includes generating a new TB for transmission in response to not receiving a retransmission grant for the TB within a predefined time before a subsequent configured grant resource.

In one embodiment, the first method includes, in response to the feedback indicating that the receiving UE device successfully received the TB, not starting the timer and generating a new TB for transmission on subsequent configured grant resources. In one embodiment, the first method includes starting a timer in response to sending the TB on a configured grant resource during the period of the sidelink configured grant and stopping the timer in response to the feedback indicating that the receiving UE device successfully received the TB.

In one embodiment, the first method includes considering NDI as toggled in response to the timer expiring and generating a new TB for transmission. In one embodiment, the first method includes stopping the timer in response to receiving a sidelink grant for an initial transmission of a new TB. In one embodiment, the first method includes flushing the buffer and generating a new TB for storage in the buffer in response to expiration of the timer.

In one embodiment, the timer is started in response to initial transmission of the TB one at least one of a dynamically scheduled sidelink resource and a configured grant resource, the timer value set such that it allows for a predefined number of retransmissions of the TB that are still within the PDB of the TB. In one embodiment, the first method includes, in response to the feedback indicating that the receiving UE device did not successfully receive the TB, retransmitting the TB on configured grant resources as long as at least one of a maximum number of retransmission is not exceeded and a packet delay budget for the TB is not exceeded.

A first apparatus for managing hybrid automatic repeat request buffers for sidelink configured grants is disclosed. A first apparatus, in one embodiment, includes a transceiver that is in communication with a receiving UE device and a network entity of a mobile wireless communication network. The first apparatus, in certain embodiments, includes a processor that transmits, via the transceiver, a transport block ("TB") to the receiving UE device using configured grant resources during a period of a sidelink configured grant.

In one embodiment, the first apparatus includes a processor that receives, via the transceiver during the period, feedback from the receiving UE device over a physical sidelink feedback channel ("PSFCH") indicating whether the TB was successfully received. In one embodiment, the first apparatus includes a processor that, in response to the feedback indicating that the receiving UE device successfully received the TB, stopping transmissions of the TB on subsequent configured grant resources of the sidelink configured grant within the same period.

The first apparatus, in one embodiment, includes a processor that, in response to the feedback indicating that the receiving UE device successfully received the TB, retransmits a pending TB from a different hybrid automatic repeat request ("HARQ") process during the period of the sidelink configured grant. In one embodiment, the first apparatus includes a processor that indicates within channel state information for the transmitting UE device an identifier for the HARQ process of the pending TB that is retransmitted.

The first apparatus, in one embodiment, includes a processor that generates a new TB and performing an initial transmission of the new TB on next configured grant resources during the period of the sidelink configured grant in response to the feedback indicating that the receiving UE device successfully received the retransmitted TB. In some embodiments, the first apparatus includes a processor that, in response to the feedback indicating that the receiving UE device successfully received the TB, uses remaining configured grant resources for the period of the sidelink configured grant for transmitting a different TB.

In one embodiment, the first apparatus includes a processor that retransmits the TB on next configured grant resources during the period of the sidelink configured grant in response to the feedback indicating that the receiving UE device did not successfully receive the TB. In one embodiment, the first apparatus includes a processor that retransmits the TB on next configured grant resources in response to not receiving any feedback from the receiving UE device over the PSFCH.

In one embodiment, the first apparatus includes a processor that buffers the TB in a HARQ buffer in response to not receiving any feedback from the receiving UE device over the PSFCH and in response to a time between an end of a last symbol of the PFSCH and a first symbol of a next configured grant resource for a HARQ process being less than a minimum processing time. In one embodiment, the first apparatus includes a processor that, in response to the feedback indicating that the receiving UE device did not successfully receive the TB, sends an indication to a network entity of a mobile wireless communication network that provides the sidelink configured grant that the receiving UE device did not successfully receive the TB, the TB buffered for retransmission; starts a timer associated with retransmissions of the TB; while the timer is running, prevents new TBs from being generated and overwriting the TB in the buffer and retransmitting the buffered TB on subsequent configured grant resources until one of the timer expires and the feedback indicates that the receiving UE device successfully received the TB.

In one embodiment, the first apparatus includes a processor that retransmits the TB in response to receiving a retransmission grant for the TB within a predefined time before a subsequent configured grant resource. In one embodiment, the first apparatus includes a processor that generates a new TB for transmission in response to not receiving a retransmission grant for the TB within a predefined time before a subsequent configured grant resource.

In one embodiment, the first apparatus includes a processor that, in response to the feedback indicating that the receiving UE device successfully received the TB, does not start the timer, and does not generate a new TB for transmission on subsequent configured grant resources. In one embodiment, the first apparatus includes a processor that starts a timer in response to sending the TB on a configured grant resource during the period of the sidelink configured grant and stopping the timer in response to the feedback indicating that the receiving UE device successfully received the TB.

In one embodiment, the first apparatus includes a processor that considers NDI as toggled in response to the timer expiring and generating a new TB for transmission. In one embodiment, the first apparatus includes a processor that stops the timer in response to receiving a sidelink grant for an initial transmission of a new TB. In one embodiment, the first apparatus includes a processor that flushes the buffer and generating a new TB for storage in the buffer in response to expiration of the timer.

In one embodiment, the timer is started in response to initial transmission of the TB one at least one of a dynamically scheduled sidelink resource and a configured grant resource, the timer value set such that it allows for a predefined number of retransmissions of the TB that are still within the PDB of the TB. In one embodiment, the first apparatus includes a processor that, in response to the feedback indicating that the receiving UE device did not successfully receive the TB, retransmits the TB on configured grant resources as long as at least one of a maximum number of retransmission is not exceeded and a packet delay budget for the TB is not exceeded.

Embodiments may be practiced in other specific forms. The described embodiments are to be considered in all respects only as illustrative and not restrictive. The scope of the invention is indicated by the appended claims.

## Claims

1. A method (400), comprising:
transmitting (405) a transport block, TB, from a buffer of a transmitting user equipment, UE, device to a receiving UE device using configured grant resources during a period of a sidelink configured grant;
receiving (410), at the transmitting UE device during the period, feedback from the receiving UE device over a physical sidelink feedback channel, PSFCH, indicating whether the TB was successfully received; and
in response to the feedback indicating that the receiving UE device successfully received the TB, stopping (415) transmissions of the TB on subsequent configured grant resources of the sidelink configured grant within the same period,
the method being **characterised by** retransmitting a pending TB from a different hybrid automatic repeat request, HARQ, process during the period of the sidelink configured grant, flushing the TB from the buffer; and
generating a new TB and performing an initial transmission of the new TB on next configured grant resources during the period of the sidelink configured grant in response to the feedback indicating that the receiving UE device successfully received the retransmitted TB.

2. The method (400) of claim 1, further comprising indicating within sidelink control information for the transmitting UE device an identifier for the HARQ process of the pending TB that is retransmitted.

3. The method (400) of claim 1, further comprising, in response to the feedback indicating that the receiving UE device successfully received the TB, using remaining configured grant resources for the period of the sidelink configured grant for transmitting a different TB.

4. The method (400) of claim 1, further comprising retransmitting the TB on next configured grant resources during the period of the sidelink configured grant in response to the feedback indicating that the receiving UE device did not successfully receive the TB.

5. The method (400) of claim 1, further comprising retransmitting the TB on next configured grant resources in response to not receiving any feedback from the receiving UE device over the PSFCH.

6. The method of claim 1, further comprising, in response to the feedback indicating that the receiving UE device did not successfully receive the TB:
sending an indication to a network entity of a mobile wireless communication network that provides the sidelink configured grant that the receiving UE device did not successfully receive the TB, the TB buffered for retransmission;
starting a timer associated with retransmissions of the TB;
while the timer is running:
preventing new TBs from being generated and overwriting the TB in the buffer; and
retransmitting the buffered TB on subsequent configured grant resources until one of the timer expires and the feedback indicates that the receiving UE device successfully received the TB.

7. The method of claim 6, further comprising retransmitting the TB in response to receiving a retransmission grant for the TB within a predefined time before a subsequent configured grant resource.

8. The method of claim 6, further comprising generating a new TB for transmission in response to not receiving a retransmission grant for the TB within a predefined time before a subsequent configured grant resource.

9. The method of claim 1, further comprising:
starting a timer in response to sending the TB on a configured grant resource during the period of the sidelink configured grant; and
stopping the timer in response to the feedback indicating that the receiving UE device successfully received the TB.

10. The method of claim 9, further comprising considering NDI as toggled in response to the timer expiring and generating a new TB for transmission.

11. A transmitting user equipment, UE, apparatus (200), comprising:
a transceiver (225) in communication with a receiving UE device and a network entity of a mobile wireless communication network; and
a processor (205) arranged to:
transmit, via the transceiver (225), a transport block, TB, to the receiving UE device using configured grant resources during a period of a sidelink configured grant;
receive, via the transceiver during the period, feedback from the receiving UE device over a physical sidelink feedback channel, PSFCH, indicating whether the TB was successfully received; and
in response to the feedback indicating that the receiving UE device successfully received the TB, stop transmissions of the TB on subsequent configured grant resources of the sidelink configured grant within the same period,
further **characterised by** being arranged to
retransmit a pending TB from a different hybrid automatic repeat request, HARQ, process during the period of the sidelink configured grant, flush the TB from the buffer; and
generate a new TB and performing an initial transmission of the new TB on next configured grant resources during the period of the sidelink configured grant in response to the feedback indicating that the receiving UE device successfully received the retransmitted TB.

12. The apparatus (200) of claim 11, wherein the processor (205) is further arranged to indicate within sidelink control information for the transmitting UE device an identifier for the HARQ process of the pending TB that is retransmitted.

13. The apparatus (200) of claim 11, wherein the processor (205) is further arranged to, in response to the feedback indicating that the receiving UE device successfully received the TB, use remaining configured grant resources for the period of the sidelink configured grant for transmitting a different TB.

14. The apparatus (200) of claim 11, wherein the processor (205) is further arranged to retransmit the TB on next configured grant resources during the period of the sidelink configured grant in response to the feedback indicating that the receiving UE device did not successfully receive the TB.

15. The apparatus (200) of claim 11, wherein the processor (205) is further arranged to retransmit the TB on next configured grant resources in response to not receiving any feedback from the receiving UE device over the PSFCH.

## Patentansprüche

1. Verfahren (400), umfassend:
Übertragen (405) eines Transportblocks, TB, aus einem Puffer einer übertragenden Benutzereinrichtungsvorrichtung, UE-Vorrichtung, an eine empfangende UE-Vorrichtung unter Verwendung konfigurierter Grant-Ressourcen während eines Zeitraums eines sidelinkkonfigurierten Grants;
Empfangen (410), an der übertragenden UE-Vorrichtung während des Zeitraums, von Feedback von der empfangenden UE-Vorrichtung über einen physischen Sidelink-Feedback-Kanal, PSFCH, das angibt, ob der TB erfolgreich empfangen wurde; und
als Reaktion auf das Feedback, das angibt, dass die empfangende UE-Vorrichtung den TB erfolgreich empfangen hat, Stoppen (415) von Übertragungen des TB auf nachfolgenden konfigurierten Grant-Ressourcen des sidelinkkonfigurierten Grants innerhalb desselben Zeitraums, wobei das Verfahren **gekennzeichnet ist durch** erneutes Übertragen eines ausstehenden TB von einem anderen Prozess hybrider automatischer Wiederholungsanforderung, HARQ, während des Zeitraums des sidelinkkonfigurierten Grants, wobei der TB aus dem Puffer geleert wird; und
Erzeugen eines neuen TB und Durchführen einer anfänglichen Übertragung des neuen TB auf nächsten konfigurierten Grant-Ressourcen während des Zeitraums des sidelinkkonfigurierten Grants als Reaktion auf das Feedback, das angibt, dass die empfangende UE-Vorrichtung den erneut übertragenen TB erfolgreich empfangen hat.

2. Verfahren (400) nach Anspruch 1, ferner umfassend das Angeben innerhalb von Sidelink-Steuerinformationen für die übertragende UE-Vorrichtung eines Bezeichners für den HARQ-Prozess des ausstehenden TB, der erneut übertragen wird.

3. Verfahren (400) nach Anspruch 1, ferner umfassend, als Reaktion auf das Feedback, das angibt, dass die empfangende UE-Vorrichtung den TB erfolgreich empfangen hat, ein Verwenden der verbleibenden konfigurierten Grant-Ressourcen für den Zeitraum des sidelinkkonfigurierten Grants zum Übertragen eines anderen TB.

4. Verfahren (400) nach Anspruch 1, ferner umfassend das erneute Übertragen des TB auf nächsten konfigurierten Grant-Ressourcen während des Zeitraums des sidelinkkonfigurierten Grants als Reaktion auf das Feedback, das angibt, dass die empfangende UE-Vorrichtung den TB nicht erfolgreich empfangen hat.

5. Verfahren (400) nach Anspruch 1, ferner umfassend das erneute Übertragen des TB auf nächsten konfigurierten Grant-Ressourcen, als Reaktion auf das Nichtempfangen von Feedback von der empfangenden UE-Vorrichtung über den PSFCH.

6. Verfahren nach Anspruch 1, ferner umfassend, als Reaktion auf das Feedback, das angibt, dass die empfangende UE-Vorrichtung den TB nicht erfolgreich empfangen hat:
Senden einer Angabe an ein Netzelement eines mobilen Drahtloskommunikationsnetzes, das den sidelinkkonfigurierten Grant bereitstellt, dass die empfangende UE-Vorrichtung den TB nicht erfolgreich empfangen hat, wobei der TB für erneute Übertragung gepuffert wird;
Starten eines Zeitgebers, der mit der erneuten Übertragung des TB verknüpft ist;
während der Zeitgeber läuft:
Verhindern, dass neue TBs erzeugt werden und den TB in dem Puffer überschreiben; und
erneutes Übertragen des gepufferten TB auf nachfolgenden konfigurierten Grant-Ressourcen, bis einer der Zeitgeber abläuft und das Feedback angibt, dass die empfangende UE-Vorrichtung den TB erfolgreich empfangen hat.

7. Verfahren nach Anspruch 6, ferner umfassend das erneute Übertragen des TB als Reaktion auf das Empfangen eines Neuübertragungs-Grants für den TB innerhalb einer vordefinierten Zeit vor einer nachfolgenden konfigurierten Grant-Ressource.

8. Verfahren nach Anspruch 6, ferner umfassend das Erzeugen eines neuen TB für Übertragung als Reaktion auf das Nichtempfangen eines Neuübertragungs-Grants für den TB innerhalb einer vordefinierten Zeit vor einer nachfolgenden konfigurierten Grant-Ressource.

9. Verfahren nach Anspruch 1, ferner umfassend:
Starten eines Zeitgebers als Reaktion auf das Senden des TB auf einer konfigurierten Grant-Ressource während des Zeitraums des sidelinkkonfigurierten Grants; und
Stoppen des Zeitgebers als Reaktion auf das Feedback, das angibt, dass die empfangende UE-Vorrichtung den TB erfolgreich empfangen hat.

10. Verfahren nach Anspruch 9, ferner umfassend ein Betrachten von NDI als umgeschaltet als Reaktion auf das Ablaufen des Zeitgebers und das Erzeugen eines neuen TB für Übertragung.

11. Übertragendes Benutzereinrichtungsgerät, UE-Gerät (200), umfassend:
einen Transceiver (225) in Kommunikation mit einer empfangenden UE-Vorrichtung und einem Netzelement eines mobilen Drahtloskommunikationsnetzes; und
einen Prozessor (205), der eingerichtet ist zum:
Übertragen, über den Transceiver (225), eines Transportblocks, TB, an die empfangende UE-Vorrichtung unter Verwendung konfigurierter Grant-Ressourcen während eines Zeitraums eines sidelinkkonfigurierten Grants;
Empfangen, über den Transceiver während des Zeitraums, von Feedback von der empfangenden UE-Vorrichtung über einen physischen Sidelink-Feedback-Kanal, PSFCH, das angibt, ob der TB erfolgreich empfangen wurde; und
als Reaktion auf das Feedback, das angibt, dass die empfangende UE-Vorrichtung den TB erfolgreich empfangen hat, Stoppen von Übertragungen des TB auf nachfolgenden konfigurierten Grant-Ressourcen des sidelinkkonfigurierten Grants innerhalb desselben Zeitraums, wobei er ferner **gekennzeichnet ist dadurch, dass** er eingerichtet ist, um einen ausstehenden TB von einem anderen Prozess hybrider automatischer Wiederholungsanforderung, HARQ, während des Zeitraums des sidelinkkonfigurierten Grants, erneut zu übertragen, wobei der TB aus dem Puffer geleert wird; und
Erzeugen eines neuen TB und Durchführen einer anfänglichen Übertragung des neuen TB auf nächsten konfigurierten Grant-Ressourcen während des Zeitraums des sidelinkkonfigurierten Grants als Reaktion auf das Feedback, das angibt, dass die empfangende UE-Vorrichtung den erneut übertragenen TB erfolgreich empfangen hat.

12. Gerät (200) nach Anspruch 11, wobei der Prozessor (205) ferner eingerichtet ist, um innerhalb von Sidelink-Steuerinformationen für die übertragende UE-Vorrichtung einen Bezeichner für den HARQ-Prozess des ausstehenden TB anzugeben, der erneut übertragen wird.

13. Gerät (200) nach Anspruch 11, wobei der Prozessor (205) ferner eingerichtet ist, um, als Reaktion auf das Feedback, das angibt, dass die empfangende UE-Vorrichtung den TB erfolgreich empfangen hat, verbleibende konfigurierte Grant-Ressourcen für den Zeitraum des sidelinkkonfigurierten Grants zum Übertragen eines anderen TB zu verwenden.

14. Gerät (200) nach Anspruch 11, wobei der Prozessor (205) ferner eingerichtet ist, um den TB auf nächsten konfigurierten Grant-Ressourcen während des Zeitraums des sidelinkkonfigurierten Grants erneut zu übertragen, als Reaktion auf das Feedback, das angibt, dass die empfangende UE-Vorrichtung den TB nicht erfolgreich empfangen hat.

15. Gerät (200) nach Anspruch 11, wobei der Prozessor (205) ferner eingerichtet ist, um den TB auf nächsten konfigurierten Grant-Ressourcen zu übertragen, als Reaktion auf das Nichtempfangen von Feedback von der empfangenden UE-Vorrichtung über den PSFCH.

## Revendications

1. Procédé (400), comprenant :
la transmission (405) d'un bloc de transport, TB, d'une mémoire tampon d'un dispositif d'équipement utilisateur, UE, de transmission à un dispositif UE de réception à l'aide de ressources d'autorisation configurée pendant un laps de temps d'une autorisation configurée de liaison latérale ;
la réception (410), au niveau du dispositif UE de transmission pendant le laps de temps, d'une rétroaction en provenance du dispositif UE de réception sur un canal de rétroaction de liaison latérale physique, PSFCH, indiquant si le TB a été reçu avec succès ; et
en réponse à la rétroaction indiquant que le dispositif UE de réception a reçu avec succès le TB, l'arrêt (415) de transmissions du TB sur des ressources d'autorisation configurée ultérieures de l'autorisation configurée de liaison latérale au cours du même laps de temps, le procédé étant **caractérisé par** la retransmission d'un TB en attente à partir d'un processus de demande de répétition automatique hybride, HARQ, différent pendant le laps de temps de l'autorisation configurée de liaison latérale, le vidage du TB de la mémoire tampon ; et
la génération d'un nouveau TB et la mise en œuvre d'une transmission initiale du nouveau TB sur des ressources d'autorisation configurée suivantes pendant le laps de temps de l'autorisation configurée de liaison latérale en réponse à la rétroaction indiquant que le dispositif UE de réception a reçu avec succès le TB retransmis.

2. Procédé (400) selon la revendication 1, comprenant en outre l'indication au sein d'informations de commande de liaison latérale pour le dispositif UE de transmission d'un identificateur pour le processus HARQ du TB en attente qui est retransmis.

3. Procédé (400) selon la revendication 1, comprenant en outre, en réponse à la rétroaction indiquant que le dispositif UE de réception a reçu avec succès le TB, l'utilisation de ressources d'autorisation configurée restantes pendant le laps de temps de l'autorisation configurée de liaison latérale pour la transmission d'un TB différent.

4. Procédé (400) selon la revendication 1, comprenant en outre la retransmission du TB sur des ressources d'autorisation configurée suivantes pendant le laps de temps de l'autorisation configurée de liaison latérale en réponse à la rétroaction indiquant que le dispositif UE de réception n'a pas reçu avec succès le TB.

5. Procédé (400) selon la revendication 1, comprenant en outre la retransmission du TB sur des ressources d'autorisation configurée suivantes en réponse à la non-réception d'une quelconque rétroaction en provenance du dispositif UE de réception sur le PSFCH.

6. Procédé selon la revendication 1, comprenant en outre, en réponse à la rétroaction indiquant que le dispositif UE de réception n'a pas reçu avec succès le TB :
l'envoi d'une indication à une entité réseau d'un réseau de communication sans fil mobile qui fournit l'autorisation configurée de liaison latérale indiquant que le dispositif UE de réception n'a pas reçu avec succès le TB, le TB étant mis en mémoire tampon pour retransmission ;
le démarrage d'un temporisateur associé à des retransmissions du TB ;
alors que le temporisateur est en cours d'exécution :
le fait d'empêcher de nouveaux TB d'être générés et l'écrasement du TB dans la mémoire tampon ; et
la retransmission du TB mis en mémoire tampon sur des ressources d'autorisation configurée ultérieures jusqu'à l'un parmi le temporisateur qui expire et la rétroaction qui indique que le dispositif UE de réception a reçu avec succès le TB.

7. Procédé selon la revendication 6, comprenant en outre la retransmission du TB en réponse à la réception d'une autorisation de retransmission pour le TB dans un délai prédéfini avant une ressource d'autorisation configurée ultérieure.

8. Procédé selon la revendication 6, comprenant en outre la génération d'un nouveau TB pour transmission en réponse à la non-réception d'une autorisation de retransmission pour le TB dans un délai prédéfini avant une ressource d'autorisation configurée ultérieure.

9. Procédé selon la revendication 1, comprenant en outre :
le démarrage d'un temporisateur en réponse à l'envoi du TB sur une ressource d'autorisation configurée pendant le laps de temps de l'autorisation configurée de liaison latérale ; et
l'arrêt du temporisateur en réponse à la rétroaction indiquant que le dispositif UE de réception a reçu avec succès le TB.

10. Procédé selon la revendication 9, comprenant en outre la prise en considération d'un NDI tel qu'activé en réponse au temporisateur expirant et la génération d'un nouveau TB pour transmission.

11. Appareil d'équipement utilisateur, UE, de transmission (200), comprenant :
un transcepteur (225) en communication avec un dispositif UE de réception et une entité réseau d'un réseau de communication sans fil mobile ; et
un processeur (205) agencé pour :
transmettre, par l'intermédiaire du transcepteur (225), un bloc de transport, TB, au dispositif UE de réception à l'aide de ressources d'autorisation configurée pendant un laps de temps d'une autorisation configurée de liaison latérale ;
recevoir, par l'intermédiaire du transcepteur pendant le laps de temps, une rétroaction en provenance du dispositif UE de réception sur un canal de rétroaction de liaison latérale physique, PSFCH, indiquant si le TB a été reçu avec succès ; et
en réponse à la rétroaction indiquant que le dispositif UE de réception a reçu avec succès le TB, arrêter des transmissions du TB sur des ressources d'autorisation configurée ultérieures de l'autorisation configurée de liaison latérale au cours du même laps de temps, **caractérisé en outre par** le fait d'être agencé pour retransmettre un TB en attente provenant d'un processus de demande de répétition automatique hybride, HARQ, différent pendant le laps de temps de l'autorisation configurée de liaison latérale, vider le TB de la mémoire tampon ; et
générer un nouveau TB et mettre en œuvre une transmission initiale du nouveau TB sur des ressources d'autorisation configurée suivantes pendant le laps de temps de l'autorisation configurée de liaison latérale en réponse à la rétroaction indiquant que le dispositif UE de réception a reçu avec succès le TB retransmis.

12. Appareil (200) selon la revendication 11, dans lequel le processeur (205) est en outre agencé pour indiquer au sein d'informations de commande de liaison latérale pour le dispositif UE de transmission un identificateur pour le processus HARQ du TB en attente qui est retransmis.

13. Appareil (200) selon la revendication 11, dans lequel le processeur (205) est agencé en outre, en réponse à la rétroaction indiquant que le dispositif UE de réception a reçu avec succès le TB, pour utiliser des ressources d'autorisation configurée restantes pendant le laps de temps de l'autorisation configurée de liaison latérale pour la transmission d'un TB différent.

14. Appareil (200) selon la revendication 11, dans lequel le processeur (205) est agencé en outre pour retransmettre le TB sur des ressources d'autorisation configurée suivantes pendant le laps de temps de l'autorisation configurée de liaison latérale en réponse à la rétroaction indiquant que le dispositif UE de réception n'a pas reçu avec succès le TB.

15. Appareil (200) selon la revendication 11, dans lequel le processeur (205) est agencé en outre pour retransmettre le TB sur des ressources d'autorisation configurée suivantes en réponse à la non-réception d'une quelconque rétroaction en provenance du dispositif UE de réception sur le PSFCH.
